# EUROPEAN PATENT SPECIFICATION

(11) **EP 0 301 609 B1**
(45) Date of publication and mention of the grant of the patent: **06.10.1993**
(21) Application number: 88201035.8
(22) Date of filing: 20.05.1988
(51) Int. Cl.: B65G 21/02

(54) **A belt conveyor**
Bandförderer
Convoyeur à bande

(30) Priority: 28.07.1987 NL 8701783
(43) Date of publication of application: 01.02.1989
(73) Proprietor: Zijlstra & Bolhuis B.V., NL-9645 LA Veendam (NL)
(72) Inventor: Middel, Jan, NL-9468 ED Annen (NL)
(74) Representative: Smulders, Theodorus A.H.J., Ir.

(56) References cited:
- DE-C- 886 873
- FR-A- 1 028 163
- GB-A- 1 310 182
- US-A- 2 094 728
- US-A- 4 013 167

## Description

This invention relates to a belt conveyor, in particular suitable for vulnerable products, such as agricultural and horticultural products, comprising a conveyor belt guided by two return rollers and a plurality of support members; at least two hollow opposite side frame sections bent from sheet material and open at the underside and each having a platelike portion which in cross-sectional view extends obliquely downwards and in the direction of the other side frame section and supports in use a side strip portion of the conveyor belt, said obliquely downwards extending platelike portion at its lower end having a depending inner flange facing a similar inner flange of the opposite side frame section, wherein the support members are mounted between said inner flanges.

Belt conveyors of this kind can be used for agricultural products, such as fruits, bulbs, tubers, potatoes and the like, and can be constructed as a horizontal conveyor or as an elevator, whether or not mounted on a mobile carriage. Furthermore, such conveyors may be telescopic.

For increasing the transport capacity, upwardly sloping side plate sections formed from sheet material and supporting a side strip portion of the conveyor belt may be positioned along the conveyor belt of the known conveyors.

Such a conveyor, designed for use as a substantially horizontal conveyor for mining products has been disclosed in FR-A-1028163.

A drawback of the known conveyor is that it is comparatively heavy, so that, in particular when telescopic mobile low-bin fillers are concerned, a heavy carriage is necessary. Also the side plate sections are rather flat and do not provide an optimum transport capacity.

Moreover, it is difficult with the known conveyor to make a telescopic embodiment wherein the height of the side strips of the conveyor belt at the transition between the main transport portion and the telescopic portion, and on the telescopic portion itself can be maintained. If the side guide is omitted along a part of the transport path, or is less high, the total transport capacity, however, decreases also, which is undesirable.

It is an object of the present invention to remove the above drawbacks and to provide in general an effective, improved conveyor suitable in particular for transporting vulnerable products in large quantities.

To that end, according to a first aspect of the invention, a belt conveyor of the above described type is characterized in that said side frame sections each are completely open as viewed in longitudinal direction, and in that said platelike portions of the side frame sections are steeply inclined and support the side strip portions of the conveyor belt in such a manner that said side strip portions form side wall portions moving together with the bottom portion of the conveyor belt, which side wall portions reach up to near the upper ridges of the side frame sections.

Some embodiments of the present invention will now be described in more detail, by way of example, with reference to the accompanying drawings, in which:
Fig. 1 is a cross-sectional view of an example of a belt conveyor known from actual practice, having a transport capacity increased by upright side wall plates;
Fig. 2 is a cross-sectional view of an embodiment of a conveyor according to the invention;
Fig. 3 is a cross-sectional view of an example of a telescopic conveyor according to the invention;
Fig. 4 is a side view of an example of a conveyor according to the invention; and
Fig. 5 shows a variant of Fig. 4.

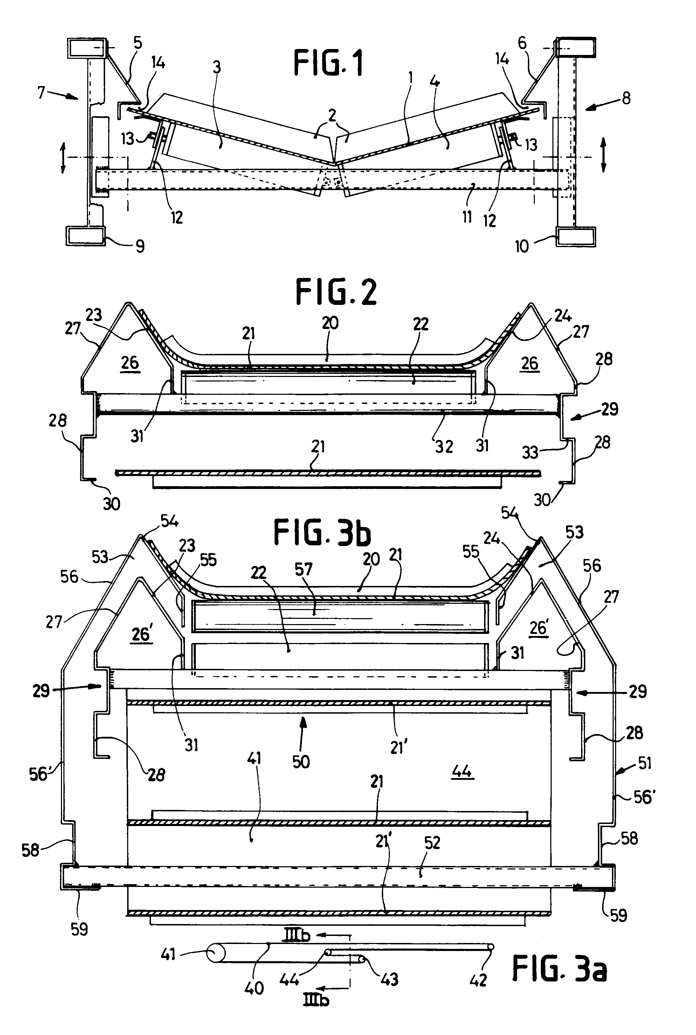

Fig. 1 shows a belt conveyor known from actual practice, comprising a belt 1, provided in this example on the transporting surface with carriers, such as chevrons or cross ribs 2, and which is guided along support rollers 3,4, downwardly inclined towards the centre of the belt, for increasing the transport capacity.

Extending obliquely upwardly from the side edges of the conveyor belt are walls 5,6, formed from plate material, said walls being mounted on side frame portions 7,8 of the conveyor. The side frame portions form part of a frame mostly constructed as a lattice construction with longitudinal girders 9,10 and cross bars 11 mounted at uniform interspaces between side frame portions, said cross bars carrying supports 12 for the shafts 13 of the rollers 3,4.

As a result of the trough shape obtained by the concave conveyor belt and the upright side walls, the material to be transported can be conveyed by the conveyor belt in a thick layer. A drawback is that a part of the material to be transported during transport slides along the walls 5,6, which may cause damage to vulnerable products, such as agricultural products.

Another drawback is that problems arise in the known apparatus during the transport e.g. of cereals, pulse crop and the like, due to the chinks present between the side edges of the conveyor belt and the fixed side walls.

Still another drawback is that in a telescopic construction of the prior art conveyor the telescopic portion including the side walls, should be provided underneath the cross bars 11. As a consequence, there is a substantial difference in height at the transition to the telescopic portion, which is bridged by the conveyor belt adapting itself gradually to the lower level of the telescopic portion. As a result,however, the side walls in this transitional region come to lie entirely or partially below the level of the conveyor belt, which may considerably limit the total transport capacity of the conveyor. Sometimes, therefore, no side walls are used on the telescopic portion or lower ones, which also limits the transport capacity.

Fig. 2 is a cross-sectional view of an example of a belt conveyor according to the present invention. The belt conveyor shown in Fig. 2 has a belt 21 provided in this example with a moulding 20, said belt being guided over straight support rollers 22. Furthermore, there are provided stationary side walls 23,24 made from plate material and extending obliquely upwardly on either side of the transport path. Contrary to what is the case in the apparatus shown in Fig. 1, the side edges of the conveyor belt in the apparatus according to the invention shown in Fig. 2 are inclined upwardly against the comparatively steep side walls 23,24, so that the conveyor belt itself forms a cross-sectionally trough-shaped transport path. The conveyor belt, consequently, is supported with its central region on the support rollers 22 and with the edge regions on the side walls. As the side walls are made from plate material and are smooth, the friction occurring between the conveyor belt and the side walls is not objectionable. It is observed in this connection that stationary support faces, instead of support rollers, are sometimes used.

The result of the configuration described, actually is a conveyor track with side walls moving along with it, thereby excluding damage to products to be transported due to friction against the side walls.

Moreover, a conveyor of this kind is highly suitable for transporting small or granular material and the like, since there is no longer a chink between the belt and the side walls and since, insofar as the side walls extend to above the inclined side strips of the conveyor belt, there is an intimate, properly sealing contact between the belt and the side walls. In practice, the side walls do not extend beyond the inclined strips of the conveyor belt, or hardly so.

In an embodiment reduced to practice of a conveyor according to the invention, the flat bottom of the trough-shaped conveyor belt may occupy 50% or more of the width of the conveyor belt, while the side walls may enclose an angle of 55° or more with the horizontal plane. There is thus obtained a substantial transport capacity, as well as a strong construction.

It is observed already now that in a telescopic conveyor according to the present invention, the trough shape of the conveyor belt is substantially maintained at the transition to the telescopic portion. This is additionally promoted by features to be described hereinafter.

According to the invention, side walls 23,24 each form part of a section made from plate material and which, according to the principle of the chassisless body known from the motorcar art, at the same time forms the side frame of the conveyor.

Each section has an upper triangular portion 26, with the apex of the triangle being directed upwards and the base lacking. One side of the triangular portion is formed by either of the above described side walls 23,24 and the other side 27 extends from the apex obliquely outwards and downwards. Approximately at the level of the under-side of the conveyor belt, side 27 passes into a substantially vertical portion 28 which, as shown in Fig. 2 at 29, may have a re-entrant portion and which may also have an inwardly bent flange 30 along the free lower edge.

Furthermore, also side walls 23,24, approximately at the level of the under-side of belt 21 , are provided with comparatively narrow depending flanges 31. The support rollers 22 are mounted between flanges 31 of the two side walls 23,24.

The two side frame sections 26 are connected by cross bars. Fig. 2 shows, by way of example, such a cross bar at 32, which is provided between the inner surfaces of the vertical portions 28, in this example more in particular between the opposite re-entrant portions 29.

Fig. 2 further shows at 21′ the return path of the conveyor belt.

It is observed that the use of self-sustaining side frame sections bent from plate material highly simplifies the construction of the frame of a belt conveyor and hence the construction of a total conveyor.

Moreover, the side frame sections, identical for both sides, can be manufactured and stocked in standard lengths of e.g. 2 meters and a conveyor of any desired length can be manufactured by attaching the required number of sections longitudinally to each other, e.g. by welding, possibly cutting the last section to the exactly desired length, installing the cross bars and subsequently mounting the support rollers.

The side walls 23 or 24 and 27 of the triangular portions preferably are comparatively steep so that there is produced as it were an open-bottomed triangular beam section which does not require further internal reinforcements.

If desired, the side frame sections can be constructed in such a manner that the contiguous ends can be inserted one into the other to some extent, in the manner of tent poles.

The frame is then completed by attaching an end portion to each end. One of the end portions comprises a drive motor and the drive pulley and the other end portion comprises a return roller. The end portions according to the invention can be constructed as standard portions, in which case the two end portions of a belt conveyor may be identical. In this manner, it becomes possible to obtain a modular build-up of a belt conveyor of any desired length from a small number of standard parts.

Moreover, a conveyor of this kind has a comparatively light weight and a comparatively low height transversely to the direction of transport.

The re-entrant portions 29 on the one hand form a reinforcement of the side frame sections and on the other hand may serve as an outer guide or bearing for applications among other things in so-called horizontal conveyors such as duo extendable belts and the like. Such a carriage is mostly mobile and is provided with supports for the conveyor, which enable the conveyor to be brought from a horizontal position into a desired inclined position.

In the example shown in Fig. 2, the portion of the side frame section situated underneath the portion 29, together with the lower flange 30 and the lowermost flange 33 of portion 29, forms a moulding being the mirror image of the moulding formed by the re-entrant portion 29. This moulding too, may serve as a guide for members, such as rollers or the like of a carriage, whether or not in combination with portion 29.

For the sake of completeness, it is observed that the mouldings need not be exact mirror images of each other and further may have a form other than the form drawn. Additional mouldings may also be provided.

Fig. 3 is a diagrammatic cross-sectional view of a telescopic conveyor according to the present invention, such as may be used in a telescopic low-bin filler. For the sake of elucidation, Fig. 3 diagrammatically shows at A the construction of a telescopic conveyor and III-III also indicates what cross section is shown at B.

Fig. 3A shows a telescopic conveyor having an endless belt 40, which is passed around a drive pulley 41 and an end return roller 42. The belt further traverses an S-shaped path formed by two intermediate rollers 43,44. To extend the conveyor, the end return roller is moved to the right and likewise rollers 43,44 are moved towards one another so that the total length of the conveyor becomes longer, while the S-shaped path is shortened accordingly. The shortening of the conveyor takes place in an opposite manner.

The cross section shown in Fig. 3B is taken on the line IIIb-IIIb in the region of intermediate rollers 43,44.

Fig. 3b shows an extendable portion 50 of a telescopic conveyor. This extendable portion in this example is identical to the conveyor shown in Fig. 2, with the exception of the level of the return path 21' of the conveyor belt. This level is determined at the cross section shown by the diameter of the end return roller 42 and by the location of the intermediate roller 43. The same reference numerals are used for the various parts of the extendable portion 50 as in Fig. 2.

Extendable portion 50, at the cross section shown, lies within the base portion 51 of the conveyor. Base portion 51, similarly to the extendable portion, consists of side frame sections connected by cross bars 52 and which each have triangular portion 53 open at the under-side, with obliquely inwardly extending walls 54, forming a guide for the side strips of the conveyor belt. Lower inner flanges 55 of the walls 54 carry the shafts for support rollers 57. Furthermore, there are provided obliquely outwardly extending walls 56, which terminate in a substantially vertically depending portion 56', which is again provided with a moulding by means of a re-entrant portion 58 and an inwardly bent lower flange 59. The cross bars 52 in this example are comparatively low, i.e. provided near the lower edge of the descending portions 56'. By virtue of such a construction, combined with a slightly broader construction of the side frame sections, sufficient space is obtained for receiving the extendable portion 50.

As a result of the triangular form open at the bottom of the side frame sections, so that the side frame sections of the base portion and the extenable portion may telescope into each other in a simple manner, and because the shafts of the support rollers or other support members are mounted between moulded portions disposed on the inside of the triangular portions, support rollers 22 of the telescopic portion can be positioned directly underneath support rollers 57 of the base portion, as shown in Fig. 3. As a result, the conveyor belt has to bridge only a tiny difference in level in the transition region between the base portion and the extendable portion. The trough shape of the conveyor belt is substantially maintained thereby, so that the telescopic design of the conveyor does not adversely affect the transport capacity or hardly so.

The moulding 28,29 of the extendable portion can now be used for guiding the same in the base portion.

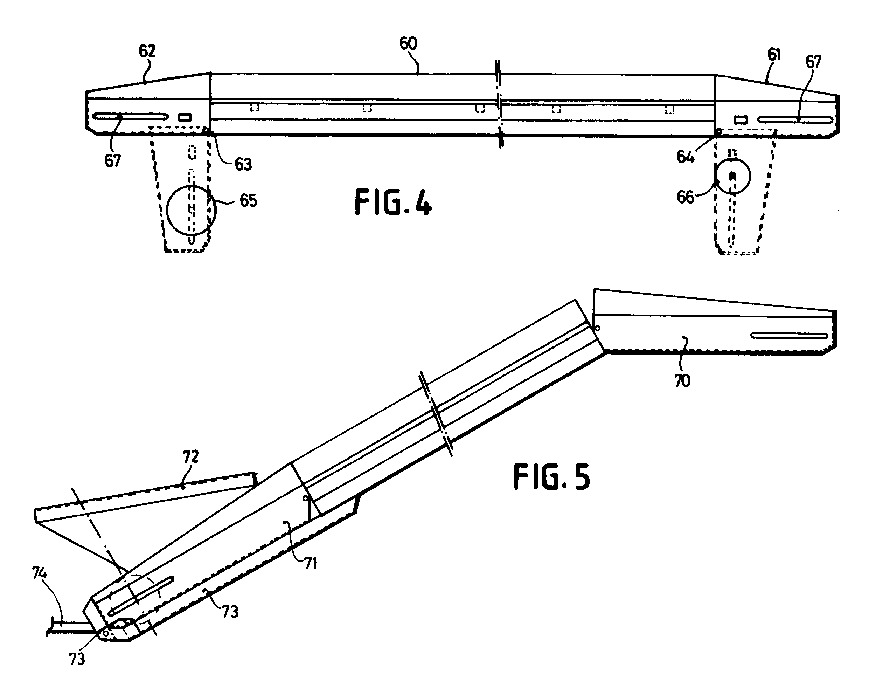

Fig. 4 is a side elevational view of a conveyor according to the invention, which is advantageously composed of standard parts. The conveyor shown in inclined position, as with a bin-filling conveyor, comprises a central portion 60 and two end portions 61,62.

Central portion 61 is composed of a suitable number of standard lengths of side frame section and cross bars. Mounted on the ends are end portions 61,62, which are preferably identical. The end portions are connected to the central portion preferably for pivotal movement about a pin transversely to the transport direction. Fig. 4 shows the pivot pins at 63,64. Also shown in broken lines are the swung-down positions of the end portions after release of locking members, not shown, such as bolts. When either of the end portions has been swung down, or both end portions have been swung down, the conveyor belt hangs loosely around the support rollers and the drive pulley 65 shown in broken lines and the end return roller 66. In that position, the endless belt can be mounted with facility and all portions of the conveyor are readily accessible for maintenance and/or repair.

The end portion 62 can also contain the drive motor. The drive motor may be positioned in the drive pulley 65.

Furthermore, both end portions have slots 67 in the side walls, extending in the transport direction, which slots together with adjusting members not shown, enable a movement of rollers 65 and/or 66, so that the conveyor belt can be tensioned and centred in the direction of travel in a simple manner.

Fig. 5 shows a variant of the conveyor shown in Fig. 4, with the upper end portion, indicated at 70, being constructed as a collapsing portion bringing the end of the transport path in a substantially horizontal orientation.

The lower end portion 71 in this example is provided with a chute 72 for the products being transported and further includes a reinforcement 73 and a drawbar 74, so that the conveyor mounted on a mobile carriage, not further shown, can be coupled to a tractor.

It is observed that after reading the foregoing, various modifications will readily occur to one skilled in the art. For instance, the side wall sections may have a shape deviating from that shown, in that e.g. a non-isosceles triangular section or a trapezoidal section are used. Such modifications are deemed not to depart from the scope of the present invention.

## Claims

1. A belt conveyor, in particular suitable for vulnerable products, such as agricultural and horticultural products, comprising a conveyor belt (21) guided by two return rollers (41,42) and a plurality of support members (22;57); at least two hollow opposite side frame sections (26;26',53) bent from sheet material and open at the underside and each having a platelike portion which in cross-sectional view extends obliquely downwards from an upper ridge in the direction of the other side frame section and supports in use a side strip portion of the conveyor belt (21;40), said obliquely downwards extending platelike portion (23,24;54) at its lower end having a depending inner flange (31;55) facing a similar inner flange of the opposite side frame section, wherein the support members (22;57) are mounted between said inner flanges,
characterized in that said side frame sections (26;26',53) each are completely open as viewed in longitudinal direction, and in that said platelike portions (23,24;54) of the side frame sections are steeply inclined and support the side strip portions of the conveyor belt in such a manner that side strip portions form side wall portions moving together with the bottom portion of the conveyor belt (21;40), which side wall portions reach up to near the upper ridges of the side frame sections.

2. A belt conveyor as claimed in claim 1, characterized in that each side frame section (26;26',53) includes a descending portion (28;57) at the outer side facing away from the other side frame section, which descending portions (28;57) are provided with at least one longitudinal moulding (29;58).

3. A belt conveyor as claimed in claim 2, characterized in that said descending portions (28) have a flange (30;59) formed along the lower edge and oriented towards the opposite side frame section.

4. A belt conveyor as claimed in any one of claims 1-3, characterized in that each side frame section is cross-sectionally substantially triangular with an open base and an upwardly oriented apex.

5. A belt conveyor as claimed in any one of the preceding claims, constructed as a telescopic conveyor having a base portion (51) and at least one extendable portion (50), and a belt (40) guided by a first return roller (41) at one end of the base portion, a second return roller (42) at the free end of the extendable portion and two rollers (43,44) at the adjacent ends of the base portion and the extendable portion respectively wherein the belt (40) follows an S-shaped path over and between said two rollers (43,44), characterized in that the base portion (51) consists of at least two opposite side frame sections (53,56') bent from plate material, which are connected by support members (57) for a conveyor belt (40) and by cross members (52), said side frame sections each being hollow and in use slidably receiving a corresponding similar but smaller hollow side frame section of the telescopic portion (50) bent from plate material, wherein the inner flanges (31) of the opposite side frame sections of the extendable portion (50) reach lower than the inner flanges (55) of the side frame sections of the base portion (51) in such a manner that the support members (22) of the extendable portion (50) are located directly underneath the support members (57) of the base portion (51) insofar as the extendable portion extends into the base portion.

6. A belt conveyor as claimed in any one of the preceding claims, characterized by end sections (61,62;70,71) provided at the opposite ends of the conveyor, said end sections containing a drive pulley (65) and an end return roller (66), respectively, and each having a self-supporting frame made from sheet material, the frames of the end sections (61,62;70,71) being substantially identical.

7. A belt conveyor as claimed in claim 6, characterized in that one end section (61,70) is constructed as a collapsing section.

8. A belt conveyor as claimed in claim 6 or 7, characterized in that one of the end sections (71) is provided with reinforcing means (73) and a drawbar (74) connected thereto.

9. A hollow side frame section bent from sheet material for a belt conveyor as claimed in any one of the preceding claims, said side frame section in the position of use being open at the underside and having an uppermost longitudinal edge, an inner flange (31;55) for supporting in use one end of a belt support member (22;57), characterized in that said side frame section (26;26',53) is completely open as viewed in longitudinal direction and comprises in the position of use a steeply inclined platelike portion (23,24;54) downwardly extending from the longitudinal edge to the inner flange (31;55), the frame section further having an outer descending flange (28;56') for supporting in use one end of a cross member (32;52) of the belt conveyor, said descending flange (28;56') being provided with at least one longitudinal moulding (29;58).

10. A side frame section as claimed in claim 9, characterized in that the steeply inclined platelike portion (23,24;54) in use in a vertical cross section encloses an angle of 55° or more with the horizontal plane.

11. A side frame section as claimed in claim 9 or 10, characterized in that the hollow side frame section in the position of use and above the inner and outer flanges (31;55 and 56' resp.) in cross section has the shape of a triangle.

## Patentansprüche

1. Bandförderer, insbesondere geeignet für empfindliche Produkte, beispielsweise landwirtschaftliche und gartenbauliche Produkte, mit einem von zwei Umlenkrollen (41,42) und mehreren Halteteilen (22;57) geführten Förderband (21); mindestens zwei einander gegenüberliegenden hohlen Seitenrahmenteilen (26;26',53), die aus Blechmaterial gebogen und an der Unterseite offen sind und die jeweils einen plattenartigen Bereich aufweisen, der sich in Querschnittsansicht von einem oberen Grat schräg abwärts in Richtung des anderen Seitenrahmenteils erstreckt und bei Betrieb einen Seitenstreifenbereich des Förderbandes (21;40) trägt, wobei der sich schräg abwärts erstreckende plattenartige Bereich (23,24;54) an seinem unteren Ende einen herabhängenden Innenflansch (31;55) aufweist, der einem gleichartigen Innenflansch des entgegengesetzten Seitenrahmenteils gegenüberliegt, wobei die Halteteile (22;57) zwischen den Innenflanschen montiert sind,
**dadurch gekennzeichnet,**
daß die Seitenrahmenteile (26;26',53) in Längsrichtung betrachtet jeweils vollständig offen sind und daß die plattenartigen Bereiche (23,24;54) der Seitenrahmenteile derart steil schrägverlaufen und die Seitenstreifenbereiche des Förderbandes stützen, daß die Seitenstreifenbereiche Seitenwandbereiche bilden, die sich zusammen mit dem Bodenbereich des Förderbandes (21;40) bewegen, wobei die Seitenwandbereiche sich aufwärts bis in die Nähe der oberen Grate der Seitenrahmenteile erstrecken.

2. Bandförderer nach Anspruch 1, dadurch gekennzeichnet, daß jeder Seitenrahmenteil (26;26',53) an der Außenseite einen dem anderen Seitenrahmenteil abgewandten herabhängenden Bereich (28; 57) aufweist, wobei die herabhängenden Bereiche (28;57) mindestens eine längsverlaufende Mulde (29;58) aufweisen.

3. Bandförderer nach Anspruch 2, dadurch gekennzeichnet, daß die herabhängenden Bereiche (28) einen Flansch (30;59) aufweisen, der entlang des unteren Randes ausgebildet und dem gegenüberliegenden Seitenrahmenteil zugewandt ist.

4. Bandförderer nach einem der Ansprüche 1-3, dadurch gekennzeichnet, daß jeder Seitenrahmenteil im Querschnitt betrachtet im wesentlichen dreieckig mit einer offenen Basis und einer aufwärtsgerichteten Spitze ausgebildet ist.

5. Bandförderer nach einem der vorhergehenden Ansprüche, konstruiert als teleskopierbarer Förderer mit einem Basisbereich (51) und mindestens einem teleskopierbaren Bereich (50), und einem Band (40), das geführt ist durch eine erste Rücklaufrolle (41) an einem Ende des Basisbereichs, eine zweite Rücklaufrolle (42) an dem freien Ende des teleskopierbaren Bereichs, und zwei Rollen (43,44) an den benachbarten Enden des Basisbereichs bzw. des teleskopierbaren Bereichs, wobei das Band (40) über und zwischen den beiden Rollen (43,44) einem S-förmigen Weg folgt, dadurch gekennzeichnet, daß der Basisbereich (51) aus mindestens zwei aus Plattenmaterial gebogenen gegenüberliegenden Seitenrahmenteilen (53,56') besteht, die durch Stützteile (57) für ein Förderband (40) und durch Querteile (52) verbunden sind, wobei die Seitenrahmenteile jeweils hohl sind und bei Betrieb einen entsprechenden gleichartigen, jedoch kleineren, hohlen, aus Plattenmaterial gebogenen Seitenrahmenteil des teleskopierbaren Bereichs (50) gleitbar aufnehmen, wobei die Innenflansche (31) der gegenüberliegenden Seitenrahmenteile des ausfahrbaren Bereichs (50) weiter abwärts reichen als die Innenflansche (55) der Seitenrahmenteile des Basisbereichs (51), derart, daß die Stützteile (22) des ausfahrbaren Bereichs (50) direkt unter den Stützteilen (57) des Basisbereichs (51) angeordnet sind, wenn sich das teleskopierbare Teil in den Basisbereich erstreckt.

6. Bandförderer nach einem der vorhergehenden Ansprüche, gekennzeichnet durch an den entgegengesetzten Enden der Förderers vorgesehene Endabschnitte (61,62;70,71), die eine Antriebsrolle (65) bzw. eine End-Rücklaufrolle (66) aufweisen und jeweils einen aus Blechmaterial gefertigten selbsttragenden Rahmen aufweisen, wobei die Rahmen der Endabschnitte (61,62;70,71) imwesentlichen identisch sind.

7. Bandförderer nach Anspruch 6, dadurch gekennzeichnet, daß ein Endabschnitt (61,70) als kollabierbarer Abschnitt konstruiert ist.

8. Bandförderer nach Anspruch 6 oder 7, dadurch gekennzeichnet, daß einer der Endabschnitte (71) mit einer Verstärkungseinrichtung (73) und einer damit verbundenen Zugstange (74) versehen ist.

9. Aus Blechmaterial gebogener hohler Seitenrahmenteil für einen Bandförderer nach einem der vorhergehenden Ansprüche, wobei der Seitenrahmenteil in der Betriebsposition an der Unterseite offen ist und einen obersten Längsrand aufweist, wobei ein Innenflansch (31;55) bei Betrieb ein Ende eines Bandstützteils (22;57) stützt, dadurch gekennzeichnet, daß der Seitenrahmenteil (26;26',53) in Längsrichtung betrachtet vollständig offen ist und in der Betriebsposition einen steil schrägverlaufenden plattenartigen Bereich (23,24;54) aufweist, der sich von dem Längsrand abwärts zu dem Innenflansch (31;55) erstreckt, wobei der Rahmenteil ferner einen herabhängenden Außenflansch (28;56') aufweist, um bei Betrieb ein Ende eines Querteils (32;52) des Bandförderers zu stützen, wobei der herabhängende Flansch (28; 56') mindestens eine längsverlaufende Mulde (29;58) aufweist.

10. Seitenrahmen nach Anspruch 9, dadurch gekennzeichnet, daß der steil schrägverlaufende plattenartige Bereich (23,24;54) bei Betrieb in vertikalem Querschnitt betrachtet in bezug zur horizontalen Ebene einen Winkel von 55° oder mehr umschließt.

11. Seitenrahmen nach Anspruch 9 oder 10, dadurch gekennzeichnet, daß der hohle Seitenrahmenteil in der Betriebsposition und über den Innen- und Außenflanschen (31;55 bzw. 56') im Querschnitt die Form eines Dreiecks hat.

## Revendications

1. Un convoyeur à bande, destiné en particulier à des produits fragiles, tels que produits agricoles et horticoles, comprenant une bande de convoyeur (21) guidée par deux rouleaux de retour (41, 42) et une pluralité d'éléments de support (22; 57); au moins deux profilés de cadre latéraux opposés creux (26; 26', 53) pliés en tôle et ouverts en dessous et ayant chacun une partie de plaque qui vue en coupe transversale s'étend obliquement vers le bas à partir d'une crête en direction de l'autre profilé de cadre et supporte en utilisation un bord latéral de la bande de convoyeur (21; 40), ladite partie de plaque s'étendant obliquement vers le bas (23, 24; 54) ayant à son extrémité la plus basse un rebord interne dépendant (31; 55) en regard avec un rebord interne similaire du profilé de cadre latéral opposé, dans lequel les éléments de support (22; 57) sont montés entre lesdits rebords internes,
caractérisé en ce que lesdits profilés de cadre (26; 26', 53) sont chacun complètement ouverts en direction longitudinale, et en ce que lesdites parties de plaque (23, 24; 54) des profilés de cadre latéraux sont inclinées avec une pente élevée et supportent les bords de bande latéraux de la bande de convoyeur de telle manière que les bords latéraux forment des parties de paroi latérales se déplaçant ensemble avec la partie inférieure de la bande de convoyeur (21; 40), lesquels bords de bande latéraux atteignant presque les plus hautes crêtes des profilés de cadre latéraux.

2. Un convoyeur à bande tel que revendiqué dans la revendication 1, caractérisé en ce que chaque profilé de cadre latéral (26; 26', 53) inclut une partie descendante (28; 57) du côté externe en regard de l'autre profité de cadre latéral, lesquelles parties descendantes (28; 57) sont munies d'au moins une moulure longitudinale (29; 58).

3. Un convoyeur à bande tel que revendiqué dans la revendication 2, caractérisé en ce que lesdites parties descendantes (28) ont un rebord (30; 59) formé le long du bord le plus inférieur et orienté vers le profité de cadre latéral opposé.

4. Un convoyeur à bande tel que revendiqué dans l'une quelconque des revendications 1-3, caractérisé en ce que chaque profité de cadre latéral est sensiblement triangulaire en coupe transversale avec une base ouverte et un sommet orienté vers le haut.

5. Un convoyeur à bande tel que revendiqué dans l'une quelconque des revendications précédentes, conçu comme un convoyeur télescopique ayant une partie de base (51) et au moins une partie de prolongement (50), et une bande (40) guidée par un premier rouleau de retour (41) à une extrémité de la partie de base, un second rouleau de retour (42) à l'extrémité libre de la partie de prolongement et deux rouleaux (43, 44) aux extrémités adjacentes de la partie de base et de la partie de prolongement respectivement, dans lequel la bande (40) suit un chemin en S au dessus et entre lesdits deux rouleaux (43, 44), caractérisé en ce que la partie de base (51) consiste en au moins deux profilés de cadre latéraux (53, 56') pliés en matériau plat, lesquels sont connectés par des éléments de support (57) d'une bande de convoyeur (40) et par des éléments transversaux (52), lesdits profilés de cadre latéraux étant chacun creux et en utilisation recevant à coulissement un profilé de cadre latéral creux correspondant similaire mais plus petit de la partie télescopique (50) plié en matériau plat, dans lequel les rebords internes (31) des profilés de cadre latéraux opposés de la partie de prolongement (50) s'étendent plus bas que les rebords internes (55) des profilés de cadre latéraux de la partie de base (51) de telle manière que les éléments de support (22) de la partie de prolongement (50) soient directement situés en dessous des éléments de support (57) de la partie de base (51) pour autant que la partie de prolongement s'étende dans la partie de base.

6. Un convoyeur à bande tel que revendiqué dans l'une quelconque des revendications précédentes, caractérisé par des profilés d'extrémité (61, 62; 70, 71) prévus aux extrémités opposées du convoyeur, lesdits profilés d'extrémité contenant respectivement une poulie motrice (65) et un rouleau de retour d'extrémité (66), et ayant chacun un cadre autoporteur en tôle, les cadres des profilés d'extrémité (61, 62; 70, 71) étant sensiblement identiques.

7. Un convoyeur à bande tel que revendiqué dans la revendication 6, caractérisé en ce qu'un profilé d'extrémité (61, 70) est conçu comme un profilé pliant.

8. Un convoyeur à bande tel que revendiqué dans la revendication 6 ou 7, caractérisé en ce qu'un profilé d'extrémité (71) est prévu avec des moyens de renfort (73) et une barre d'attelage (74) reliée à ceux-ci.

9. Un profilé d'encadrement latéral creux plié en tôle pour un convoyeur à bande tel que revendiqué dans l'une quelconque des revendications précédentes, ledit profilé d'encadrement latéral étant ouvert en dessous en configuration d'utilisation et ayant un bord longitudinal sur le dessus, un rebord interne (31; 55) pour supporter en utilisation une extrémité d'un élément de support de bande (22; 57), caractérisé en ce que ledit profilé d'encadrement latéral (26; 26', 53) est complètement ouvert dans le sens de la longueur et comprend en configuration d'utilisation une partie de plaque inclinée avec une pente élevée (23, 24; 54) s'étendant vers le bas du bord longitudinal au rebord interne (31; 55), le profité de cadre ayant en outre un rebord descendant externe (28; 56') pour supporter en utilisation une extrémité d'un élément transversal (32; 52) du convoyeur à bande, ledit rebord descendant (28; 56') étant muni d'au moins une moulure longitudinale (29;' 58).

10. Un profilé de cadre latéral tel que revendiqué dans la revendication 9, caractérisé en ce que la partie de plaque inclinée avec une pente élevée (23, 24; 54) fait en utilisation, en coupe transversale verticale, un angle de 55° ou plus avec le plan horizontal.

11. Un profilé de cadre latéral tel que revendiqué dans la revendication 9 ou 10, caractérisé en ce que le profilé de cadre latéral creux en configuration d'utilisation et au dessus des rebords interne et externe (31; 55 et 56' respectivement) a en coupe transversale la forme d'un triangle.
